Europäisches Patentamt

European Patent Office

Office européen des brevets

(19)

(11) **EP 0 756 155 A2**

(12) **EUROPÄISCHE PATENTANMELDUNG**

(43) Veröffentlichungstag:
29.01.1997 Patentblatt 1997/05

(51) Int. Cl.⁶: **G01D 5/38**

(21) Anmeldenummer: 96111062.4

(22) Anmeldetag: 10.07.1996

(84) Benannte Vertragsstaaten:
AT CH DE FR GB LI NL SE

(30) Priorität: 27.07.1995 DE 19527421

(71) Anmelder: ROBERT BOSCH GMBH
70442 Stuttgart (DE)

(72) Erfinder:
• Drabarek, Pawel
75233 Tiefenbronn (DE)
• Kuehnle, Goetz, Dr. Dipl.-Phys.
70825 Korntal-Muenchingen (DE)
• Schilling, Ulrich, Dipl.-Phys.
70567 Stuttgart (DE)

(54) **Vorrichtung zur absoluten Positionsmessung**

(57) Die Erfindung bezieht sich auf eine Vorrichtung zur absoluten Positionsmessung eines Teils, das mit einem bzgl. des Teils ortsfesten Hologramm-Maßstab verbunden ist und dessen Lage mit einer optischen Meßanordnung durch Auswerten der Phasenlage einer gebeugten Strahlung festgestellt wird. Der Aufwand für die optische Meßanordnung und die Handhabung wird dadurch verringert, daß der Hologramm-Maßstab mindestens eine Spur mit einer Gitterstruktur aufweist, in der eine relativ zur gewünschten Auflösung große Gitterperiode für den absoluten Meßbereich vorgesehen ist, und daß die Gitterstruktur so gestaltet ist, daß in die erste und in zumindest eine höhere oder nur in höhere Beugungsordnungen genügend Strahlung zur Erfassung mit der Sensoreinrichtung und Messung der Phasenlage mit der Signalverarbeitungseinrichtung gebeugt wird, wobei die höheren Beugungsordnungen durch das eine gewünschte Auflösung bestimmende Verhältnis von Gitterperiode zur Beugungsordnung bestimmt sind.

## FIG. 1

## Beschreibung

### Stand der Technik

Die Erfindung bezieht sich auf eine Vorrichtung zur absoluten Positionsmessung eines Teils mit einer optischen Meßanordnung, die einen bzgl. des Teils ortsfesten Hologramm-Maßstab zum Erzeugen einer gebeugten Strahlung aus mindestens einer Meßwelle, eine Sensoreinrichtung und eine daran angeschlossene Signalverarbeitungseinrichtung aufweist, mit der durch Auswerten der Phasenlage der gebeugten Strahlung die absolute Position des Teils bzgl. der Meßwelle bestimmbar ist.

Eine Vorrichtung dieser Art ist in der DE 43 17 064 A1 als bekannt ausgewiesen. Bei dieser bekannten Vorrichtung wird die Position eines Teils mittels einer optischen Meßanordnung bestimmt, die einen bezüglich des Teils ortsfesten Hologramm-Maßstab in Form mehrerer in Spuren angeordneter optischer Gitter aufweist. Zum Messen der Position wird einerseits zum Erreichen einer feinen Auflösung die Phasenlage der von einer oder mehreren einzelnen Spuren gebeugten Strahlung ausgewertet, die sich bei Änderung der Position gegenüber der auf die Spur geführten Meßwelle der Strahlung ändert. Andererseits werden die Phasenlagen der einzelnen Spuren, deren Gitterkonstanten sich voneinander unterscheiden bzw. einen Phasensprung aufweisen, in der Signalverarbeitungseinrichtung miteinander verknüpft, um den Meßbereich, in dem die Absolutposition eindeutig bestimmbar ist, zu erweitern. Zum Auswerten der Phasenlage sind in dieser Druckschrift verschiedene Möglichkeiten angegeben, wie das Phasenschiebeverfahren, das Fouriertransformationsverfahren und das Heterodyn-Verfahren, das beispielsweise in dem Artikel von Th. Kreis und W. Osten, "Automatische Rekonstruktion von Phasenverteilungen aus Interferogrammen" in der Zeitschrift "Technisches Messen" 58, 1991, R. Oldenbourg Verlag, S. 235 bis 246, näher erläutert ist.

Wegen der nebeneinander angeordneten Spuren, auf die jeweils Meßwellen gerichtet und deren gebeugte Strahlen jeweils ausgewertet werden müssen, ist die Meßanordnung relativ aufwendig und der Holgramm-Maßstab auch in einer zweiten Dimension ausgedehnt, so daß es beispielsweise schwierig ist, die Meßanordnung für eine zweidimensionale Positionsmessung auszulegen.

### Vorteile der Erfindung

Der Erfindung liegt die Aufgabe zugrunde, eine Vorrichtung der eingangs genannten Art bereitzustellen, die hinsichtlich der optischen Meßanordnung vereinfacht und besser handhabbar ist.

Diese Aufgabe wird mit den im Patentanspruch 1 angegebenen Merkmalen gelöst.

Hiernach ist also vorgesehen, daß der Hologramm-Maßstab mindestens eine Spur mit einer Gitterstruktur aufweist, in der eine relativ zur gewünschten Auflösung große Gitterperiode für den absoluten Meßbereich vorgesehen ist, und daß die Gitterstruktur so gestaltet ist, daß in die erste und in zumindest eine höhere Beugungsordnung oder nur in höhere Beugungsordnungen genügend Strahlung zur Erfassung mit der Sensoreinrichtung und Messung der Phasenlage mit der Signalverarbeitungseinrichtung gebeugt wird, wobei die höheren Beugungsordnungen durch das eine gewünschte Auflösung bestimmende Verhältnis von Gitterperiode zur Beugungsordnung bestimmt sind.

Aufgrund der großen Gitterperiode, die beispielsweise im Bereich einiger 100 µm oder im mm-Bereich liegen kann, wird ein großer absoluter Meßbereich erzielt. Der absolute Meßbereich beträgt bei Auswertung einer Spur allgemein lediglich eine Gitterperiode, da die Phasenlage grundsätzlich lediglich modulo 360° bestimmbar ist, so daß der Eindeutigkeitsbereich bei Auswertung der ersten Beugungsordnung auf eine Gitterperiode beschränkt ist. Für einen großen Eindeutigkeitsbereich ist demnach die gewonnene große Gitterperiode günstig. Dies ergibt sich aus der Beziehung

$$\phi_m = 2\pi * m * x/d \qquad (1)$$

Gleichzeitig wird eine hohe Auflösung dadurch erzielt, daß eine höhere Beugungsordnung ausgewertet wird, wodurch sich eine um den Faktor m höhere Positionsauflösung ergibt. Durch Auswertung unterschiedlicher Beugungsordnungen kann somit mittels nur einer Spur des Hologramm-Maßstabs ein großer Eindeutigkeitsbereich für die absolute Positionsmessung bei gleichzeitig hoher Positionsauflösung erzielt werden.

Allgemein gilt für die Phasendifferenz des Lichts in den Beugungsordnungen $m_1$ und $m_2$ in Abhängigkeit von einer Positionsänderung bzw. Verschiebung x

$$\phi_{Diff} = \phi_1 - \phi_2 = 2\pi * (m_1 - m_2) * x/d \qquad (2).$$

Da $m_1$ und $m_2$ stets ganzzahlig sind, besitzt $\phi_{Diff}$ als maximale Signalperiode eine Gitterperiode d.

Wird beispielsweise ein Gitter mit der Gitterperiode 128 µm verwendet und werden gemäß Gleichung (2) die 15. und die 16. Beugungsordnung verknüpft, so kann zum Erfassen der absoluten Position diese zunächst in einem Meßbereich von 128 µm bestimmt werden. Durch anschließende Auswertung der 16. Beugungsordnung wird eine Positionsauflösung erreicht, die der bei Verwendung eines Gitters mit einer Gitterperiode von 8 µm entspricht. Dieselbe Auflösung wird erreicht, wenn bei einem Gitter mit einer Gitterperiode von 1024 µm die 113., die 120. und die 128. Beugungsordnung verknüpft werden. In beiden Beispielen beträgt der Eindeutigkeitsbereich eine Gitterperiode, also 128 µm bzw. 1024 µm.

Entscheidend für die Gewinnung des großen Eindeutigkeitsbereichs einerseits bei hoher Positionsauflösung andererseits ist, das der Hologramm-Maßstab so gestaltet ist, daß die Phasenlage in mehreren Beugungsordnungen auswertbar ist. Die Phasenwerte in den Meßpunkten ändern sich bei Positionsänderung unterschiedlich. Gemäß der eingangs genannten DE 43 17 064 A1 sind dafür unterschiedliche Spuren erforderlich.

Vorteilhafte Ausgestaltungen sind in den Unteransprüchen angegeben.

Ist vorgesehen, daß die Beugungseffizienz der ausgewerteten Ordnungen quantitativ festgelegt und mittels der Signalverarbeitungseinrichtung auswertbar ist, so kann mittels einer Amplitudencodierung der Eindeutigkeitsbereich auch über eine Gitterperiode d hinaus erweitert werden. Eine Möglichkeit zur Gewinnung solcher Gitterstrukturen bietet das von der Dimensionierung von Dammann - Gittern her bekannte Verfahren, das zum Beispiel in Damman - H.; Görtler, K.: Highefficiency in-line multiple imaging by means of multiple phase holograms. Opt. Commun. 3 (1971) 5:312-315, Krackhardt, U.; Streibl, N.: Design of Dammann-gratings for array generation. Opt. Commun. 74 (1989) 1,2: 31-36 und in Lüpken, Hermann; Pauka, Thomas; Bräuer, Ralf; Wyrowski, Frank; Bryngdahl, Olof: On the design of Dammann gratings. Opt. Commun. 100 (1993) 5,6: 415-420 beschrieben ist.

Eine weitere Möglichkeit, den Eindeutigkeitsbereich für die absolute Positionsmessung auf Werte deutlich größer als eine Gitterperiode zu erweitern, besteht darin, daß für die Bereichserweiterung zusätzlich zur Phasendifferenz die absoluten Phasenwerte herangezogen werden.

Weiterhin kann vorgesehen sein, daß in der Spur Felder ausgebildet sind, die unterschiedliche Intensitäten der in entsprechenden Beugungsordnungen gebeugten Strahlung ergeben, und daß die unterschiedlichen Intensitäten in der Signalverarbeitungseinrichtung auswertbar sind. Auch hierdurch besteht eine Möglichkeit, den Eindeutigkeitsbereich zu vergrößern, wobei zusätzlich die in den unterschiedlichen Intensitäten entsprechender Beugungsordnungen enthaltene Information ausgenutzt wird.

Wie bisherige Messungen gezeigt haben, läßt sich der Eindeutigkeitsbereich auf Werte von zumindest einigen Millimetern erweitern, so daß sich die Möglichkeit ergibt, mit z. B. kapazitiven oder induktiven oder anderen Verfahren den Meßbereich weiter zu vergrößern.

Eine zweidimensionale Positionsmessung wird auf einfache Weise dadurch möglich, daß mindestens zwei Spuren vorgesehen sind, die bezüglich der Spurerstreckung zweidimensional zueinander angeordnet, d.h. gekreuzt sind.

Die Erfindung wird nachfolgend anhand eines Ausführungsbeispiels unter Bezugnahme auf die Zeichnungen näher erläutert. Es zeigen:

Fig. 1    schematisch eine Spur eines Hologramm-Maßstabs, die als periodische Gitterstruktur ausgebildet ist, und

Fig. 2    eine Vorrichtung zur Positionsmessung, in der die optische Meßanordnung schematisch dargestellt ist.

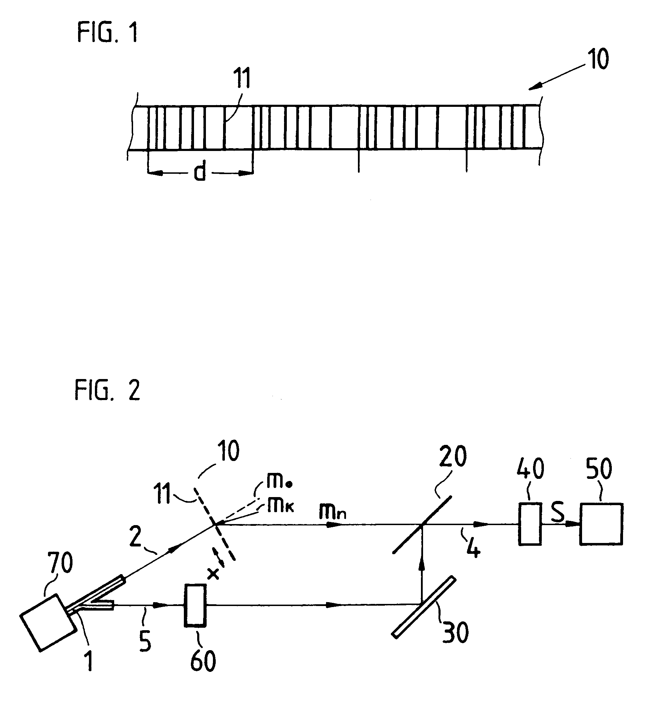

In Figur 1 ist ein Hologramm-Maßstab 10 ausschnittsweise in Form einer Spur mit einer Gitterstruktur dargestellt, die eine Gitterperiode d mit mehreren Gitterlinien aufweist. Die Gitterstruktur ist dadurch ausgezeichnet, daß die Intensität der in die erste Beugungsordnung $m_1$ und zumindest eine höhere Beugungsordnung $m_n$ oder nur in mehrere höhere Beugungsordnungen $m_k$, $m_n$ gebeugten Strahlung einer Meßwelle 2 (vgl. Figur 2) genügend hoch ist, um sie mit einer nachgeschalteten photoelektrischen Sensoreinrichtung 40 und einer Signalverarbeitungseinrichtung 50 auswerten zu können. Konstruiert werden können solche Gitter nach bekannten Herstellungsverfahren bspw. unter Zuhilfenahme der Fouriertransformation, insbesondere auch nach Verfahren, die von der Dimensionierung von Dammann-Gittern her bekannt sind, wozu bspw. auf die vorstehend genannten Literaturstellen hingewiesen sei.

In Figur 2 ist eine Vorrichtung zur absoluten Positionserfassung mit einer optischen Meßanordnung schematisch dargestellt. Eine Strahlungsquelle 70 gibt bspw. über einen Lichtleiter eine Ausgangswelle 1 ab, aus der die Meßwelle 2 und eine Referenzwelle 5 abgeleitet werden. Die Meßwelle 2 erreicht den Hologramm-Maßstab 10 in Form der Gitterstruktur und wird an dieser in mehreren Ordnungen $m_o$, $m_k$, $m_n$ gebeugt. Die gebeugte Strahlung mehrerer auszuwertender Beugungsordnungen $m_k$, $m_n$ wird auf entsprechende Strahlteiler 20 geführt, von denen in Figur 2 nur derjenige für die Beugungsordnung $m_n$ dargestellt ist. An dem Strahlteiler 20 wird die gebeugte Strahlung mit der über einen Modulator 60 modulierten Referenzwelle 5, die über ein Ablenkelement 30 geführt ist, zur Interferenz gebracht. Die entstehende Empfangswelle 4 trifft auf eine Sensoreinrichtung 40, deren abgegebenes Signal S einer Signalverarbeitungseinrichtung 50 zugeführt wird. Entsprechend werden auch Empfangswellen der übrigen auszuwertenden Beugungsordnungen $m_k$ gebildet und der Signalverarbeitungseinrichtung 50 zugeführt.

Bei Positionsänderung des Auftreffortes der Meßwelle 2 auf dem Hologramm-Maßstab 10 ändert sich die Phasenlage der gebeugten Strahlung, und zwar unterschiedlich in den einzelnen Beugungsordnungen $m_k$, $m_n$. Wegen der hohen Frequenz der Strahlungswellen kann deren Phasenlage und damit auch die Änderung der Phasenlage nicht unmittelbar mit einer Meißeinrichtung erfaßt werden. Die Phasenlage der an dem Hologramm-Meßstab 10 gebeugten Strahlung wird technisch dadurch auswertbar, daß die gebeugte Strahlung mit der Referenzwelle 5 beispielsweise an dem Strahlteiler 20 zur Interferenz gebracht wird, wobei die Referenzwelle mit dem Modulator 60 beispielsweise mit einer Frequenz zwischen 1 KHz und 100 MHz moduliert wird. Diese Modulation kann, wie in der eingangs genannten DE 43 17 064 A1 näher beschrieben, mit bekannten Methoden, beispielsweise dem Phasenschiebeverfahren, oder der Heterodyn-Technik vorgenommen werden. In der DE 43 17 064 A1 sind diesbezüglich als weitere Literaturstellen ein Artikel von Th. Kreis und W. Osten, "Automatische Rekonstruktion von Phasenverteilungen aus Interferogrammen" in der Zeitschrift "Technisches Messen" 58, 1991, R. Oldenbourg Verlag, S. 235 bis 246, und zum Aufbau der Positionsmeßvorrichtung die DE-OS 39 30 554 genannt, auf die auch hier hinsichtlich erläuternder Einzelheiten Bezug genommen wird.

Wie vorstehend beschrieben, ist die Phasenlage grundsätzlich nur modulo 360° bestimmbar, so daß der Eindeutigkeitsbereich für die absolute Positionsmessung gemäß Gleichung (1) bei Auswertung der ersten Beugungsordnung $m_1$ auf eine Gitterperiode beschränkt ist. Vorliegend ist die Gitterstruktur derart ausgestaltet, daß im Vergleich zur gewünschten Positionsauflösung die Gitterperiode d groß ist, um einen großen Eindeutigkeitsbereich zu erzielen. Die Ausnutzung derselben Beugungsordnung, die zur absoluten Positionsmessung herangezogen wird, ist daher für sich allein nicht geeignet, die gewünschte hohe Positionsauflösung zu erzielen.

Mit der für eine Auswertung genügend hohen Lichtintensität in den höheren Beugungsordnungen $m_n$ gelingt es aber, eine um den Faktor $m_n$ höhere Positionsauflösung zu erzielen, wie aus Gleichung (1) ableitbar ist. Um die Meßposition absolut zu bestimmen, entspricht dabei der resultierende Eindeutigkeitsbereich mindestens der bei der Auswertung der ersten Beugungsordnung $m_1$ erreichten Positionsauflösung.

Durch die Verknüpfung der Phasenlagen verschiedener Beugungsordnungen $m_k$, $m_n$ lassen sich durch geeignete Auslegung der Gitterstrukturen grundsätzlich beliebige Eindeutigkeitsbereiche und Positionsauflösungen realisieren, die in der Praxis jedoch im wesentlichen durch die endliche Phasenmeßgenauigkeit begrenzt sind. Dabei ist eine kaskadierte Vorgehensweise zweckmäßig, bei der, ausgehend von z.B. der ersten Beugungsordnung, die Position zunächst grob bestimmt wird; anschließend wird durch die Hinzunahme von höheren Beugungsordnungen die Position mit der geforderten Genauigkeit ermittelt. Eine weitere Verfeinerung der Auflösung kann mit herkömmlichen Methoden erfolgen.

Mit Hilfe der Gleichung (2) kann z.B. die vorstehend beschriebene Gitterstruktur mit der Gitterperiode d 128 μm gefunden werden, bei der die 15. und die 16. Beugungsordnung herangezogen werden, um zunächst die Position grob in einem Meßbereich von 128 μm zu bestimmen und anschließend durch Auswertung der 16. Beugungsordnung eine Positionsauflösung zu erzielen, die der bei Verwendung eines Gitters mit einer Gitterperiode d von 8 μm entspricht. Entsprechend wird auch das Gitter mit der Gitterperiode d 1024 μm erhalten, bei dem die 113., die 120. und die 128. Beugungsordnung verknüpft werden. Es kann bei der Auswertung vorteilhaft sein, anstelle der ersten und einer oder mehrerer höherer Beugungsordnungen verschiedene, benachbarte höhere Beugungsordnungen zu verknüpfen, da dann die Strahlung an der Gitterstruktur in eine "Vorzugsrichtung" gebeugt wird und entsprechend hohe Intensitäten der Strahlung erhalten werden. Es können auch mehr als drei Ordnungen verknüpft werden.

Zur Erweiterung des Eindeutigkeitsbereichs über eine Gitterperiode d hinaus können zudem andere Codier- und Auswerteverfahren eingesetzt werden. Neben der Ausnutzung der Phasendifferenz und der absoluten Phasenwerte kommt dabei die Ausnutzung weiterer Beugungsordnungen und eine zusätzliche Amplitudencodierung in Frage, um verschiedene Gitterperioden zu unterscheiden. Bei der Amplitudencodierung muß die Beugungseffizienz der betrachteten Ordnungen oder das Intensitätsverhältnis verschiedener Ordnungen quantitativ definiert sein. Dies läßt sich z. B. mit den von der Dimensionierung von Dammann-Gittern her bekannten Verfahren gemäß den vorstehend angegebenen Literaturstellen erreichen. Ferner könnte die Intensität der gebeugten Strahlung entsprechender Beugungsordnungen in verschiedenen Feldern der Spur durch entsprechende Konstruktion der Gitterstruktur unterschiedlich beeinflußt werden, um den Eindeutigkeitsbereich über eine Gitterperiode d hinaus zu erweitern.

Wird eine weitere Spur in einer zweiten Richtung angeordnet, so ist mit wenig Aufwand auch eine zweidimensionale Positionserfassung möglich.

Da nur eine Spur bzw., bei der zweidimensionalen Positionserfassung, zwei Spuren erforderlich sind, genügt die Erzeugung nur einer bzw. zweier Meßwellen 2, so daß sich auch hierdurch der Aufwand verringert und die Justierung vereinfacht wird.

Als Modulationsvorrichtungen eignen sich die in der DE 43 17 064 A1 und in den dort in bezug genommenen Literaturstellen im einzelnen angegebenen Vorrichtungen und Verfahren, so daß vorliegend auf nähere Angaben dazu verzichtet wird.

Mit der beschriebenen Vorrichtung läßt sich nicht nur eine hohe Dynamik (Verhältnis von Eindeutigkeitsbereich zu Positionsauflösung) erzielen, sondern es wird auch die Möglichkeit geboten, eine Geschwindigkeitsmessung großer Dynamik, d. h. über einen großen Geschwindigkeitsmeßbereich durchzuführen. Hierzu ist in der Signalverarbeitungseinrichtung 50 eine entsprechende Auswertestufe vorgesehen, mit der die zeitlichen Ableitungen der Positionsänderungen gebildet werden können.

## Patentansprüche

1. Vorrichtung zur absoluten Positionsmessung eines Teils mit einer optischen Meßanordnung, die einen bzgl. des Teils ortsfesten Hologramm-Maßstab zum Erzeugen einer gebeugten Strahlung aus mindestens einer Meßwelle, eine Sensoreinrichtung und eine daran angeschlossene Signalverarbeitungseinrichtung aufweist, mit der durch Auswerten der Phasenlage der gebeugten Strahlung die absolute Position des Teils bzgl. der Meßwelle bestimmbar ist,
dadurch gekennzeichnet,
daß der Hologramm-Maßstab (10) mindestens eine Spur mit einer Gitterstruktur aufweist, in der eine relativ zur gewünschten Auflösung große Gitterperiode (d) für den absoluten Meßbereich vorgesehen ist, und daß die Gitterstruktur so gestaltet ist, daß in die erste und in zumindest eine höhere oder nur in höhere Beugungsordnungen ($m_k$, $m_n$) genügend Strahlung zur Erfassung mit der Sensoreinrichtung (40) und Messung der Phasenlage mit der Signalverarbeitungseinrichtung (50) gebeugt wird, wobei die höheren Beugungsordnungen ($m_k$, $m_n$) durch das eine gewünschte Auflösung bestimmende Verhältnis von Gitterperiode (d) zur Beugungsordnung ($m_k$, $m_n$) bestimmt sind.

2. Vorrichtung nach Anspruch 1,
dadurch gekennzeichnet,
daß die Beugungseffizienz der ausgewerteten Ordnungen ($m_k$, $m_n$) quantitativ festgelegt und mittels der Signalverarbeitungseinrichtung (50) auswertbar ist.

3. Vorrichtung nach Anspruch 1 oder Anspruch 2,
dadurch gekennzeichnet,
daß mittels der Signalverarbeitungseinrichtung (50) für die Erweiterung des Eindeutigkeitsbereichs zusätzlich zur Phasendifferenz die absoluten Phasenlagen heranziehbar und auswertbar sind.

4. Vorrichtung nach einem der vorhergehenden Ansprüche,
dadurch gekennzeichnet,
daß in der Spur Felder ausgebildet sind, die unterschiedliche Intensitäten der in entsprechenden Beugungsordnungen ($m_k$, $m_n$) gebeugten Strahlung ergeben, und
daß die unterschiedlichen Intensitäten in der Signalverarbeitungseinrichtung (50) auswertbar sind.

5. Vorrichtung nach einem der vorhergehenden Ansprüche,
dadurch gekennzeichnet,
daß mindestens zwei Spuren vorgesehen sind, die bezüglich der Spurerstreckung zweidimensional zueinander angeordnet sind.

6. Vorrichtung nach einem der vorhergehenden Ansprüche,
dadurch gekennzeichnet,
daß der Eindeutigkeitsbereich durch Kombination mit einer kapazitiven der induktiven Positionsmeßvorrichtung vergrößerbar ist.

7. Vorrichtung nach einem der vorhergehenden Ansprüche,
dadurch gekennzeichnet,
daß in der Signalverarbeitungseinrichtung (50) eine Geschwindigkeitsmeßeinrichtung vorgesehen ist.

8. Vorrichtung nach einem der vorhergehenden Ansprüche,
dadurch gekennzeichnet,
daß zur Messung der Phasenlage eine Heterodyn- oder eine Phasenschiebe-Vorrichtung vorgesehen ist.

FIG. 1

FIG. 2